# EUROPEAN PATENT APPLICATION

(11) **EP 3 214 709 A1**
(43) Date of publication of application: **06.09.2017**
(21) Application number: 15853867.8
(22) Date of filing: 13.03.2015
(51) Int. Cl.: H02B 13/035, H01H 33/16, H01H 33/64, H01H 33/662, H01H 33/664, H02B 13/055, H02B 13/065, H02B 13/075

(54) **SWITCHGEAR**

(30) Priority: 30.10.2014 JP 2014220964
(71) Applicant: Hitachi Industrial Equipment Systems Co., Ltd., Tokyo 101-0022 (JP)
(72) Inventor: SATO, Takashi, Tokyo 100-8280 (JP); TSUCHIYA, Kenji, Tokyo 100-8280 (JP); MORITA, Ayumu, Tokyo 100-8280 (JP); YANO, Makoto, Tokyo 100-8280 (JP)
(74) Representative: Strehl Schübel-Hopf & Partner
(86) International application number: PCT/JP2015/057406
(87) International publication number: WO 2016/067647

(57) **Abstract**

An object of the invention is to provide a switch that can prevent leakage of an SF6 gas and reduce the amount of SF6 gas to be used. To achieve the object described above, the invention is characterized in that an arc-extinguishing chamber including an insulating tube, a fixed end plate provided at one end of the insulating tube, a movable end plate provided at the other end of the insulating tube, a fixed electrode provided on the fixed end plate, a movable electrode that is allowed to move and so provided as to pass through the movable end plate, a bellows attached to the movable end plate and the movable electrode, and a supply/discharge port for supplying and discharging a gas, a first bushing conductor electrically connected to the fixed electrode, and a second bushing conductor electrically connected to the movable electrode are provided, and the arc-extinguishing chamber, the first bushing conductor, and the second bushing conductor are embedded in a molded solid insulator to form a switching section.

## Description

### Technical Field

The present invention relates to a switchgear for power reception and distribution, and particularly to the structures of a disconnector, a load break switch, an earthing switch, an earthing disconnector, a switchgear, and a switch for multi-circuit changeover.

### Background Art

An example of a switchgear of related art will be described with reference to the configuration of the switch described in PTL 1. The switch includes a fixed electrode, a movable electrode, a current collector, an insulating operation rod, a bushing conductor, and other components accommodated in a container formed of an electrical insulator, and the container encapsulates an SF6 gas or any other insulating gas to form the switch.

In the configuration described above, the opening at each end of the electrical insulator, which forms the container, is sealed by a metal flange and a sealer, such as an O ring, so that no leakage of the SF6 gas inside the container occurs. Further, the SF6 gas is encapsulated in the entire container.

### Citation List

### Patent Literature

PTL 1: US 2012/0285806

### Summary of Invention

### Technical Problem

In the switch described in PTL 1, the opening at each end of the electrical insulator, which forms the container, is sealed by a metal flange and a sealer, such as an O ring, so that no leakage of the SF6 gas inside the container occurs, but the O ring has a high probability of transmission of a trace amount of SF6 gas and is therefore likely to leak a small amount of SF 6 gas into the air during its product life of several tens of years. Further, since the SF6 gas is encapsulated in the entire container, a large amount of SF6 gas is undesirably used.

An object of the invention is to provide a switch that can prevent leakage of an SF6 gas and reduce the amount of SF6 gas to be used.

### Solution to Problem

To achieve the object described above, the invention is characterized in that an arc-extinguishing chamber including an insulating tube, a fixed end plate provided at one end of the insulating tube, a movable end plate provided at the other end of the insulating tube, a fixed electrode provided on the fixed end plate, a movable electrode that is allowed to move and so provided as to pass through the movable end plate, a bellows attached to the movable end plate and the movable electrode, and a supply/discharge port for supplying and discharging a gas, a first bushing conductor electrically connected to the fixed electrode, and a second bushing conductor electrically connected to the movable electrode are provided, and the arc-extinguishing chamber, the first bushing conductor, and the second bushing conductor are embedded in a molded solid insulator to form a switching section.

### Advantage of Invention

According to the present invention, leakage of the SF6 gas can be avoided, and the amount of SF6 gas to be used can be reduced.

### Brief Description of Drawings

[Fig. 1] Fig. 1 is a longitudinal cross-sectional view showing a gas disconnector according to a first embodiment.
[Fig. 2] Fig. 2 is a bottom transverse cross-sectional view of the gas disconnector according to the first embodiment.
[Fig. 3] Fig. 3 is a longitudinal cross-sectional view showing a gas disconnector according to a second embodiment.
[Fig. 4] Fig. 4 is a longitudinal cross-sectional view showing a gas load break switch according to a third embodiment.
[Fig. 5] Fig. 5 is a longitudinal cross-sectional view showing a gas earthing switch according to a fourth embodiment.
[Fig. 6] Fig. 6 is a longitudinal cross-sectional view showing a gas load break switch according to a fifth embodiment.
[Fig. 7] Fig. 7 is a longitudinal cross-sectional view showing a gas encapsulating fuse according to a sixth embodiment.
[Fig. 8] Fig. 8 is a longitudinal cross-sectional view showing a gas earthing disconnector according to a seventh embodiment.
[Fig. 9] Fig. 9 is a longitudinal cross-sectional view showing the close state in the seventh embodiment.
[Fig. 10] Fig. 10 is a longitudinal cross-sectional view showing the disconnected state in the seventh embodiment.
[Fig. 11] Fig. 11 is a longitudinal cross-sectional view showing the earth state in the seventh embodiment.
[Fig. 12] Fig. 12 shows a single-phase connection diagram of a switchgear according to an eighth embodiment.
[Fig. 13] Fig. 13 is a side longitudinal cross-sectional view of the switchgear according to the eighth embodiment.
[Fig. 14] Fig. 14 is a front view of the switchgear according to the eighth embodiment.
[Fig. 15] Fig. 15 is a longitudinal cross-sectional view showing a switchgear according to a ninth embodiment.
[Fig. 16] Fig. 16 is a longitudinal cross-sectional view showing a gas earthing disconnector according to a tenth embodiment.
[Fig. 17] Fig. 17 is a longitudinal cross-sectional view showing a gas earthing load break switch according to an eleventh embodiment.
[Fig. 18] Fig. 18 is a longitudinal cross-sectional view showing a gas multi-circuit changeover switch according to a twelfth embodiment.
[Fig. 19] Fig. 19 is a longitudinal cross-sectional view showing a gas multi-circuit changeover switch according to a thirteenth embodiment.
[Fig. 20] Fig. 20 is a longitudinal cross-sectional view showing a gas multi-circuit changeover switch according to a fourteenth embodiment.
[Fig. 21] Fig. 21 is a longitudinal cross-sectional view showing a gas multi-circuit changeover switch according to a fifteenth embodiment.
[Fig. 22] Fig. 22 is a longitudinal cross-sectional view showing a gas multi-circuit changeover switch according to a sixteenth embodiment.
[Fig. 23] Fig. 23 is a longitudinal cross-sectional view showing a switchgear according to a seventeenth embodiment.
[Fig. 24] Fig. 24 is a longitudinal cross-sectional view showing a gas multi-circuit changeover switch according to an eighteenth embodiment.
[Fig. 25] Fig. 25 is a longitudinal cross-sectional view showing a gas multi-circuit changeover switch according to a nineteenth embodiment.
[Fig. 26] Fig. 26 is a longitudinal cross-sectional view showing a gas switchgear according to a twentieth embodiment.
[Fig. 27] Fig. 27 is a longitudinal cross-sectional view showing a gas switchgear according to a twenty-first embodiment.
[Fig. 28] Fig. 28 is a longitudinal cross-sectional view showing a gas switchgear according to a twenty-second embodiment.
[Fig. 29] Fig. 29 is a longitudinal cross-sectional view showing a gas switchgear according to a twenty-third embodiment.
[Fig. 30] Fig. 30 is a longitudinal cross-sectional view showing a gas switchgear according to a twenty-fourth embodiment.
[Fig. 31] Fig. 31 is a longitudinal cross-sectional view showing a gas switchgear according to a twenty-fifth embodiment.

### Description of Embodiments

Embodiments will be described below with reference to the drawings. The following description is merely an example of implementation of the invention, and the contents of the invention are not limited to the following specific aspects. The invention can, of course, be changed to those in a variety of aspects including the following aspects. It is noted that the same reference character represents the same part in each of the embodiments and no duplicated description will therefore be made.

### First embodiment

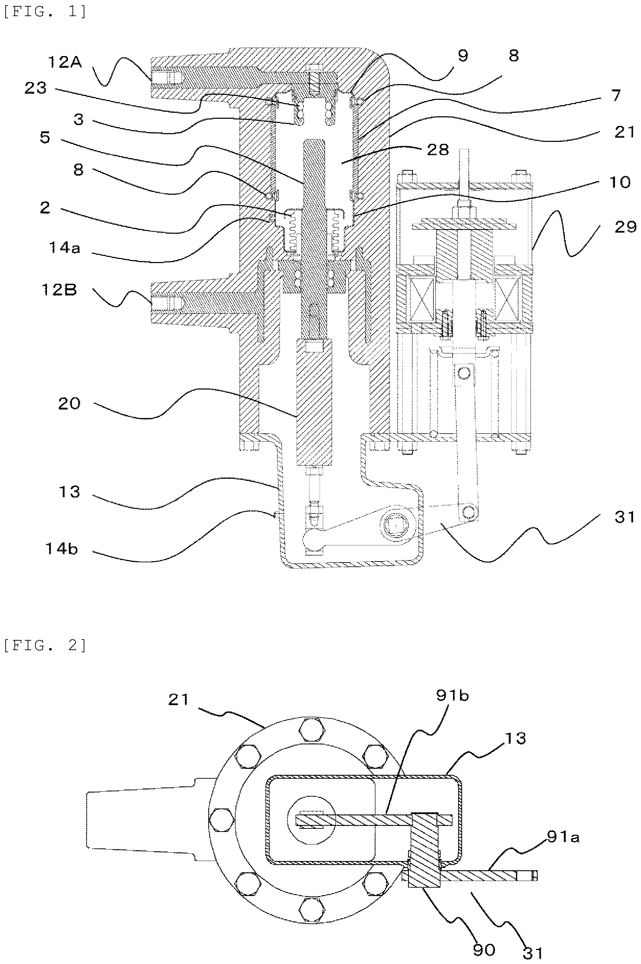

A first embodiment will be described with reference to Figs. 1 and 2. A gas disconnector according to the first embodiment is so configured that a gas valve 28 in which a fixed electrode 3, a spring contact 23, which is provided in the fixed electrode, and a movable electrode 5 are disposed in an arc-extinguishing chamber formed of a ceramic insulating tube 7, a fixed end plate 9, a movable end plate 10, and a bellows 2, into which an SF6 gas is introduced through a port 14a, and the SF6 gas is encapsulated, busing conductors 12A and 12B, and an electric field relaxation shield 8 are embedded in a molded solid insulator 21 made, for example, of an epoxy resin, as shown in Fig. 1. Conducive paint may be applied or otherwise placed as required onto the outer surface of the solid insulator 21 to allow the outer surface to have earth potential. The movable electrode 5 is driven by a two-position electromagnetic actuator 29 via an insulating operation rod 20 and a lever 31 in such a way that the movable electrode 5 comes into contact with or separates away from the fixed electrode 3. The insulating operation rod 20 is disposed in a hermetically closed space formed of the solid insulator 21 and a mechanism case 13, and dry air is introduced via a port 14b into the hermetically closed space and encapsulated therein. An SF6 gas may instead be encapsulated. At this point, the gas pressure in the arc-extinguishing chamber is set, for example, at 0.15 MPa and the gas pressure in the mechanism case is set, for example, at 0.12 PMa to reduce the pressure difference applied to the bellows so that the life of the bellows is prolonged. Further, the bushing conductors 12A and 12B are made of aluminum in the case of a low-current switch, whereas they are made of copper in the case of a high-current switch.

In the thus configured gas valve, in which the ceramic insulating tube 7, the fixed end plate 9, the movable end plate 10, and the bellows 2 are brazed to each other and surrounded by the molded solid insulator made, for example, of an epoxy resin, the amount of leakage of the SF6 gas encapsulated in the gas valve decreases and environmental adaptability therefore increases, as compared with an O-ring-based sealing structure. Further, since the SF6 gas only needs to be encapsulated only in the small arc-extinguishing chamber that covers only the circumference of the portion formed of the fixed electrode 3 and the movable electrode 5, which are required to have current switching performance and withstand voltage performance, the amount of SF6 gas to be used can be advantageously reduced.

Fig. 2 shows a bottom transverse cross-sectional view of the gas disconnector according to the first embodiment. A shaft 90, which passes through the mechanism case 13, is so disposed as to be rotatable relative to the mechanism case 13 with airtightness between the shaft 90 and the mechanism case 13 maintained, for example, by using an O ring that is not shown, and links 91 a and 91 b are attached to the shaft 90 to form the lever 31.

In this configuration, the shaft 90 can freely rotate relative to the mechanism case 13 with the airtightness maintained, for example, by using an O ring that is not shown to externally transmit drive force to the interior of the mechanism case 13. The airtightness can therefore be advantageously maintained with high reliability, as compared with linear sealing.

### Second embodiment

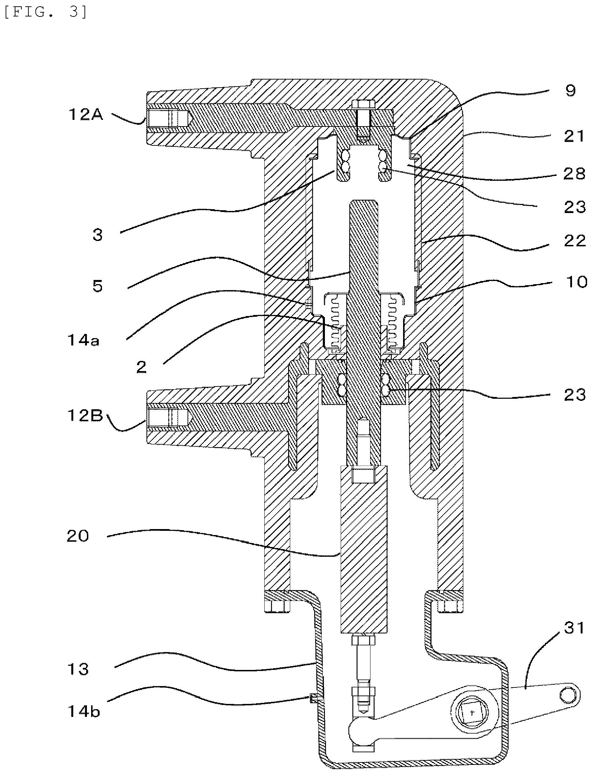

A second embodiment will next be described with reference to Fig. 3. A gas disconnector according to the second embodiment is so configured that a gas valve 28 in which a fixed electrode 3 and the movable electrode 5 are disposed in an arc-extinguishing chamber formed of a fixed end plate 9, a movable end plate 10, a bellows ,and a solid insulating tube 22 which made, for example, of an epoxy resin and into which an SF6 gas is introduced through the port 14a, and in which the SF6 gas is encapsulated, and the busing conductors 12A and 12B are embedded in the molded solid insulator 21 made, for example, of an epoxy resin. Conducive paint may be applied or otherwise placed as required onto the outer surface of the solid insulator 21 to allow the outer surface to have earth potential. The other portions are configured in the same manner as those in the first embodiment.

In the configuration described above, since the gas valve 28 is formed of the solid insulating tube 22, the fixed end plate 9, and the movable end plate 10, which are embedded by epoxy resin, the amount of leakage of the SF6 gas encapsulated in the gas valve decreases and environmental adaptability therefore increases, as compared with an O-ring-based sealing structure, as in the first embodiment. Further, since the SF6 gas needs to be encapsulated only in the small arc-extinguishing chamber that covers only the circumference of the portion formed of the fixed electrode 3 and the movable electrode 5, which are required to have current switching performance and withstand voltage performance, the amount of SF6 gas to be used can be advantageously reduced.

### Third embodiment

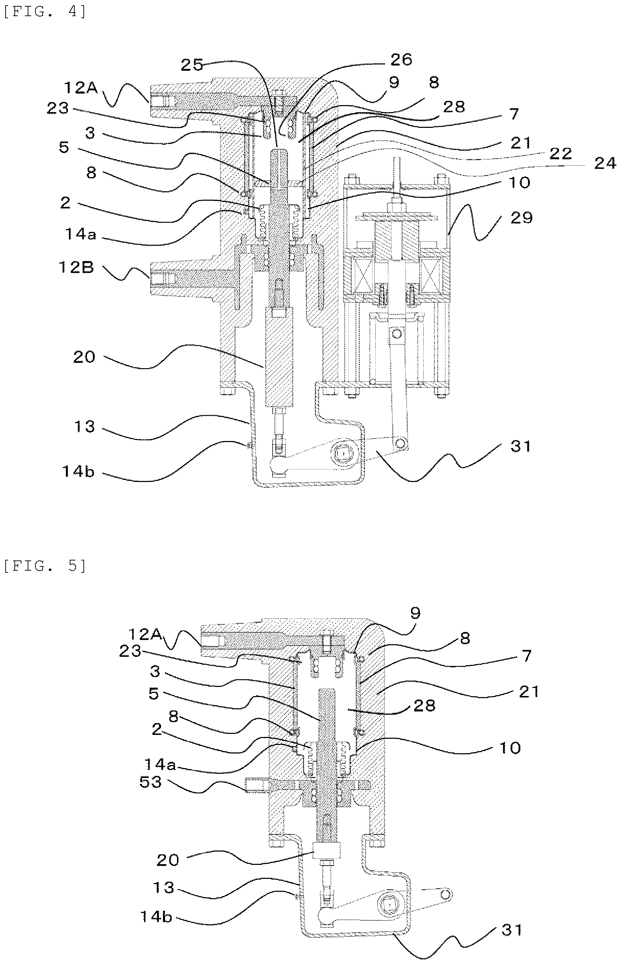

A third embodiment will next be described with reference to Fig. 4. In the third embodiment, in addition to the configuration in the first embodiment, the solid insulating tube 22 and a piston 24 are provided in the gas valve 28, and an orifice 25 is further so provided as to extend along the center axis of the movable electrode 5, pass through the movable electrode 5, and reach the rear surface of the piston 24, as shown in Fig. 4. An arc-resistant metal 26 is provided on the surface of the fixed electrode 3.

In this configuration, in the process in which the movable electrode 5 is driven from the close position to the open position, the pressure of the gas in the space surrounded by the solid insulating tube 22, the piston 24, and the movable end plate 10 increases as the volume of the space decreases, and the gas is therefore exhausted through the orifice 25 and out of the front end of the movable electrode 5. The gas is sprayed to the arc ignited between the movable electrode 5 and the fixed electrode 3 to improve the current interruption performance, whereby large load current can be advantageously interrupted.

### Fourth embodiment

A fourth embodiment will next be described with reference to Fig. 5. In the fourth embodiment, an earthing switch is formed by providing an earth terminal 53 in place of the movable-side bushing conductor 12B in the configuration in the first embodiment.

In this configuration, the configuration of the earthing circuit is advantageously simplified and reduced in size.

### Fifth embodiment

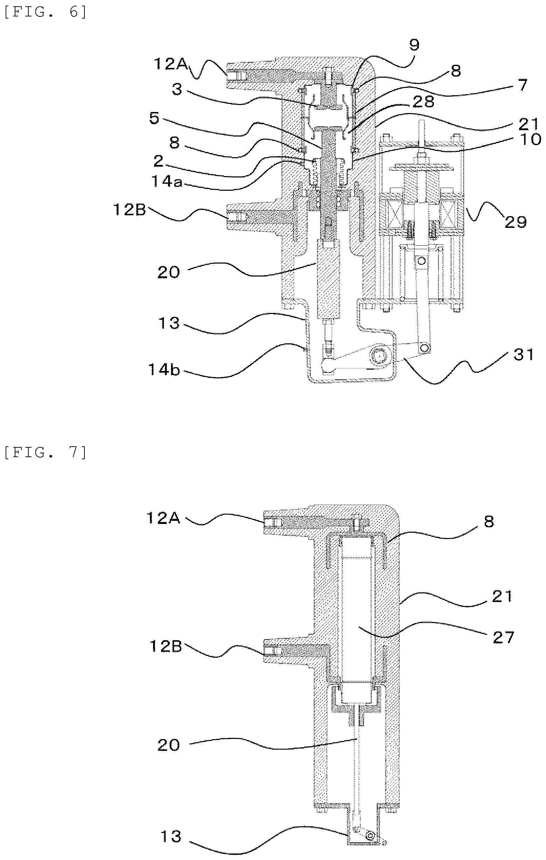

A fifth embodiment will next be described with reference to Fig. 6. In the fifth embodiment, to produce a magnetic field perpendicular to the arc ignited between the fixed electrode 3 and the movable electrode 5, each of the contact portions of the fixed electrode 3 and the movable electrode 5 in the configuration of the first embodiment has a spiral shape.

In this configuration, the arc ignited between the fixed electrode 3 and the movable electrode 5 is magnetically driven along the outer circumference of the electrodes so that the arc cooling effect is enhanced, whereby the current interruption performance is improved, and large load current can therefore be advantageously interrupted.

### Sixth embodiment

A sixth embodiment will next be described with reference to Fig. 7. In the sixth embodiment, a fuse 27, the bushing conductors 12A and 12B, the electric field relaxation shield 8 are together embedded in the molded solid insulator 21 made, for example, of an epoxy resin.

In this configuration, the interior of the high-voltage fuse is filled with a silver fuse element and silica sand, which serves as an arc-extinguishing ability, and the space between a cap and a porcelain enclosure is sealed with an adhesive or silicon rubber, so that the pressure produced when the fuse is melted is confined. The configuration in which the entire fuse is molded with an epoxy resin does not allow exchange of the fuse. On the other hand, moisture cannot intrude from the surrounding environment into the fuse, whereby degradation in performance of the fuse can be avoided. That is, since the portion where the porcelain enclosure and the cap of the fuse are joined with each other is covered with the epoxy resin, moisture is unlikely to intrude from the surrounding environment into the fuse, whereby degradation in the performance of the fuse is advantageously avoided.

It is conceivable that a unit is first formed by combining an insulating container formed of a solid insulating tube, a fixed end plate, and a movable end plate, the bushing conductors 12A and 12B , the electric field relaxation shield 8, in which one side of insulating container is open, the fuse 27 is then assembled into the unit, a cap for maintaining airtightness is attached to the unit, and the interior of the thus formed airtight space is filled with an SF6 gas. This configuration using a small amount of SF6 gas advantageously improves insulation reliability of the outer circumferential surface of the fuse.

### Seventh embodiment

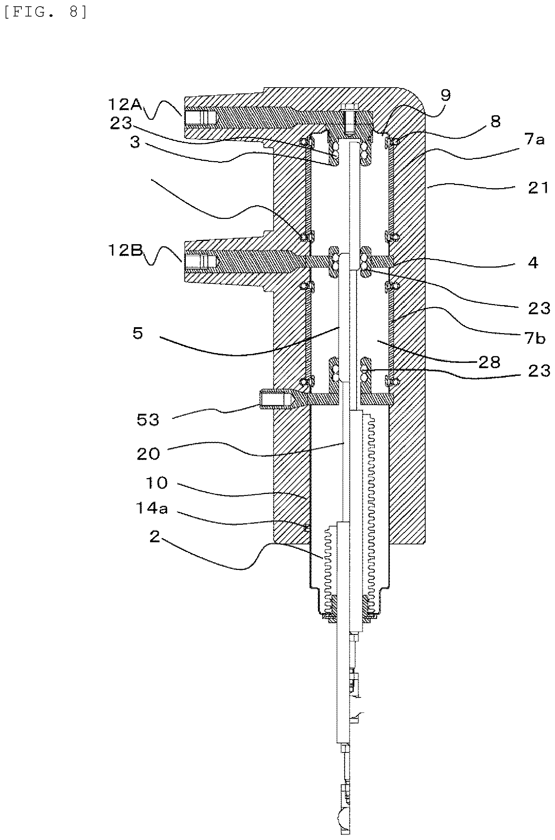

A seventh embodiment will be described with reference to Figs. 8 to 11. Fig. 8 is a longitudinal cross-sectional view showing both the close state and the open state in the seventh embodiment. In Fig. 8, the fixed electrode 3 and the movable electrode 5 are disposed in an arc-extinguishing chamber formed of the fixed end plate 9, a ceramic insulating tube 7a, an intermediate electrode 4, a ceramic insulating tube 7b, the movable end plate 10, and the bellows 2, into which an SF6 gas is introduced through the port 14a, and in which the SF6 gas is encapsulated, the busing conductors 12A and 12B, and the electric field relaxation shield 8 are embedded in the molded solid insulator 21 made, for example, of an epoxy resin. Conducive paint is applied or otherwise placed as required onto the outer surface of the solid insulator 21 to allow the outer surface to have earth potential. The open state of the movable electrode 5, the insulating operation rod 20, and the bellows 2 is shown in the left half of Fig. 8, and the close state is shown in the right half of Fig. 8. A power supply circuit is connected to the fixed-side bushing conductor 12A, a load circuit is connected to the movable-side bushing conductor 12B, and an earth circuit is connected to the earth terminal 53.

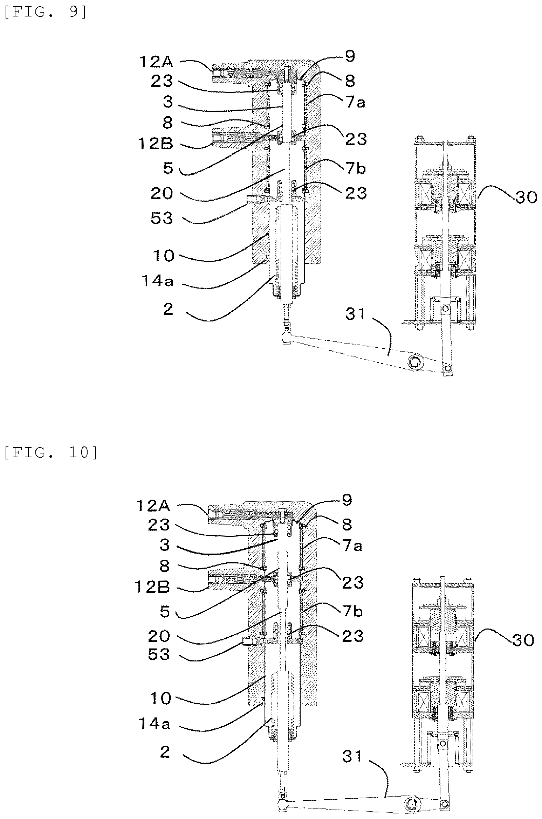

Fig. 9 shows the close state in the seventh embodiment. In Fig. 9, a three-position electromagnetic actuator 30 is shown, and the insulating operation rod 20 is driven by the three-position electromagnetic actuator 30 via the lever 31. When the output shaft of the three-position electromagnetic actuator 30 is in a lower position, the movable electrode 5 is driven to an upper position, the fixed-side bushing conductor 12A and the movable-side bushing conductor 12B electrically conduct to each other via the movable electrode 5, and the power supply circuit and the load circuit are connected to each other.

Fig. 10 shows the open state in the seventh embodiment. When the output shaft of the three-position electromagnetic actuator 30 is in an intermediate position, the movable electrode 5 is driven to an intermediate position, the fixed-side bushing conductor 12A and the movable electrode 5 as well as the movable electrode 5 and the earth terminal 53 are separate from each other and do not electrically connect to each other, and the power supply circuit and the load circuit as well as the load circuit and the earth circuit are electrically isolated from each other.

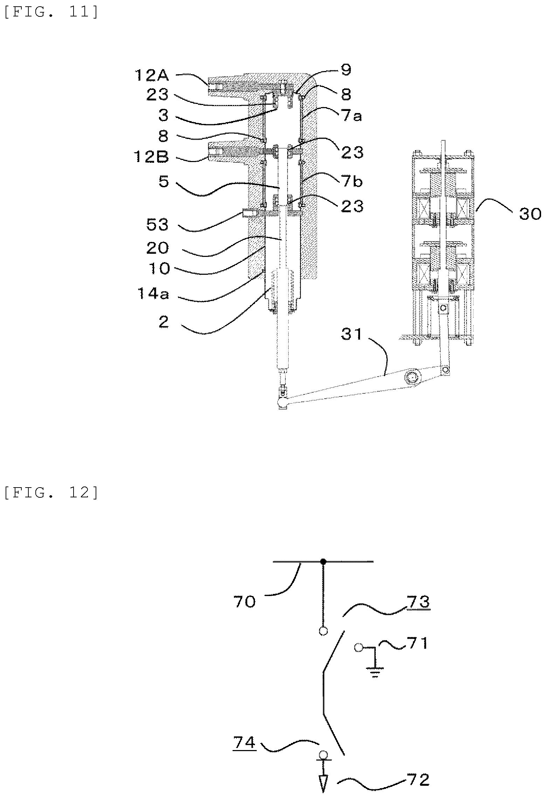

Fig. 11 shows the earth state in the seventh embodiment. When the output shaft of the three-position electromagnetic actuator 30 is in an upper position, the movable electrode 5 is driven to a lower position, the movable-side bushing conductor 12B and the earth terminal 53 electrically conduct to each other via the movable electrode 5, and the load circuit and the earth circuit are connected to each other.

In this configuration, the advantageous effects of prevention of leakage of the SF6 gas and reduction in the amount of SF6 gas to be used are provided, as in the first embodiment. Further, the earth disconnection function can be advantageously achieved with the compactness and high reliability maintained.

### Eighth embodiment

An eighth embodiment will be described with reference to Figs. 12 to 14. Fig. 12 shows a single-phase connection diagram in the eighth embodiment. The eighth embodiment, in which an earth disconnecting switch 73 and an interrupter 74 are connected in series to each other, provides current conducting, current interrupting, circuit disconnecting, and earthing functions associated with a power supply circuit 70, an earth circuit 71, and a load circuit 72.

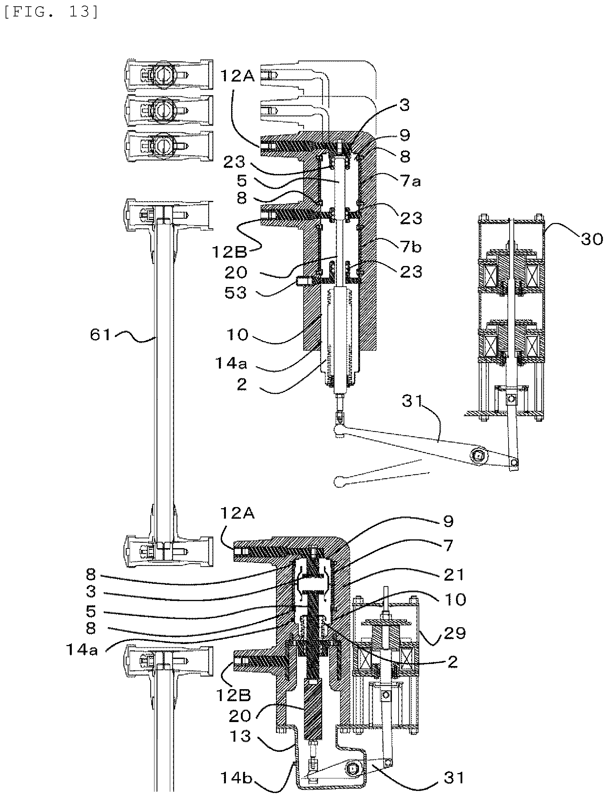

Fig. 13 is a side longitudinal cross-sectional view of the configuration in Fig. 8. Connecting the seventh embodiment shown in Figs. 8 to 11 and the fifth embodiment shown in Fig. 6 to a solid insulating bus 61 allows formation of the circuit shown in Fig. 12.

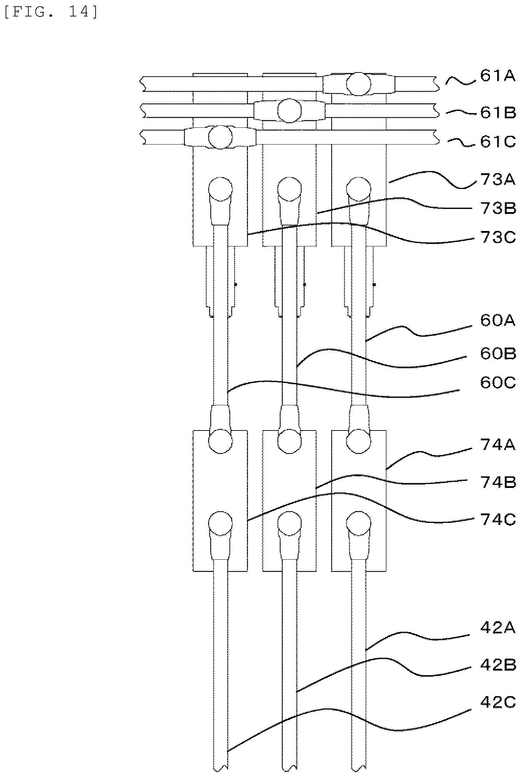

Fig. 14 is a front view of the configuration in the eighth embodiment. Earth disconnecting switch 73A, 73B, and 73C and interrupter 74A, 74B, and 74C are connected to each other via solid insulating buses 60A, 60B, and 60C to connect loads connected to cables 42A, 42B, and 42C to the power supply, or disconnect loads from the power supply, or connect loads to the earth circuit.

In this configuration, the advantageous effects of prevention of leakage of the SF6 gas and reduction in the amount of SF6 gas to be used are provided, as in the first embodiment.

### Ninth embodiment

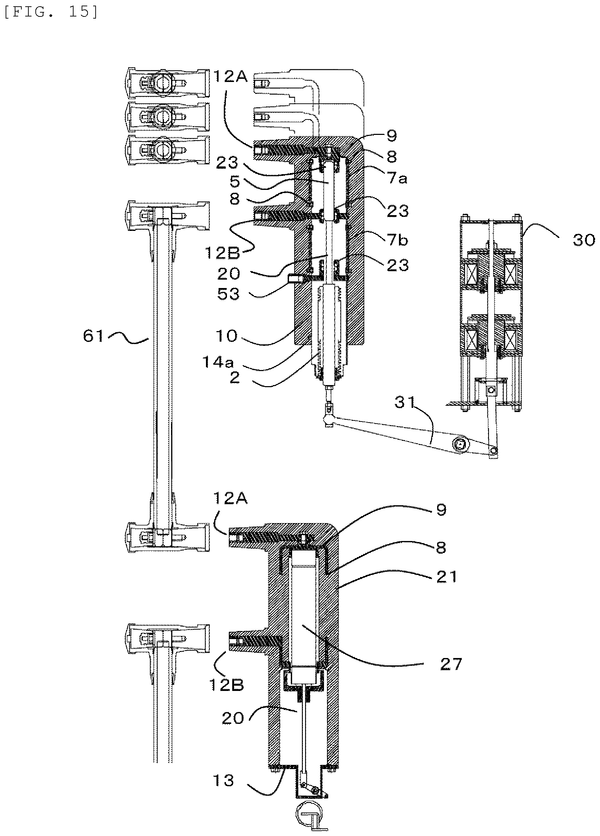

A ninth embodiment will be described with reference to Fig. 15. The ninth embodiment is an embodiment in which the current interrupter in the eighth embodiment is replaced with the gas encapsulating fuse shown in the sixth embodiment.

In the present configuration, a switch for multi-circuit changeover can be configured at a low cost. Further, the advantageous effects of prevention of leakage of the SF6 gas and reduction in the amount of SF6 gas to be used are provided, as in the other embodiments.

### Tenth embodiment

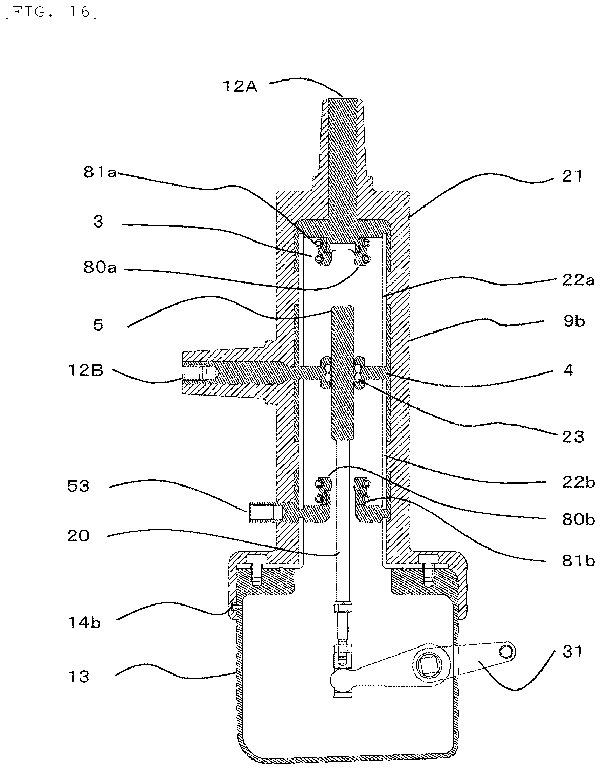

A tenth embodiment will be described with reference to Fig. 16. In the tenth embodiment, solid insulating tubes 22a and 22b, the bushing conductors 12A and 12B, and the earth terminal 53 are joined with each other, for example, with an adhesive to form an arc-extinguishing chamber, the mechanism case 13 is fastened to the arc-extinguishing chamber with bolts with airtightness between the arc-extinguishing chamber and the mechanism case 13 maintained with a seal member, such as an O ring to form a sealed container, and a gas valve into which an SF6 gas is introduced through the port 14b provided in the mechanism case 13 and in which the SF6 gas is encapsulated is further surrounded by the molded solid insulator 21 made, for example, of an epoxy resin. Springs 81a and 81b are provided around contact 80a and 80b, and the movable electrode 5 is electrically connected to the bushing conductors via the contact.

In this configuration, since the arc-extinguishing chamber can be partially assembled and can be fastened to the mechanism case 13 with bolts, the assembly is readily performed. Further, since after the SF6 gas is encapsulated, the port 14b and the seal member are so embedded in the molded solid insulator 21 as to be covered therewith, leakage of the SF6 gas encapsulated is reduced as compared with an O-ring-based sealing structure, and high environmental adaptability is provided, as in the first embodiment.

### Eleventh embodiment

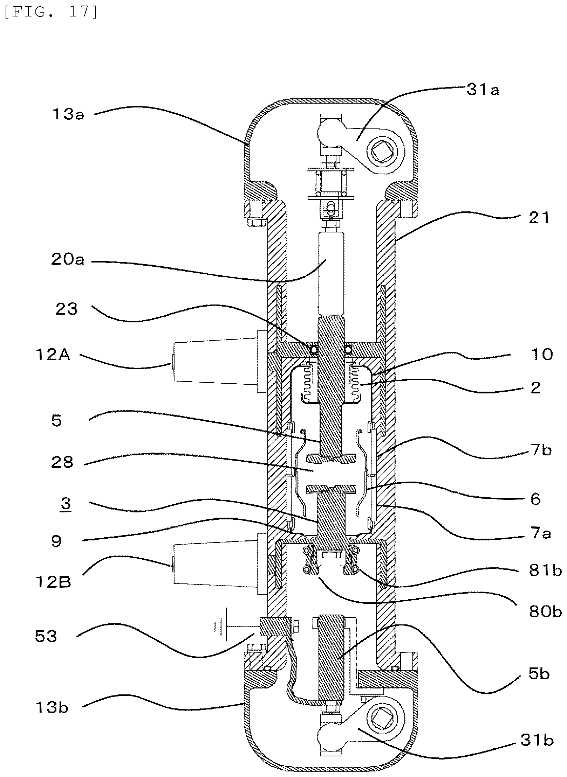

An eleventh embodiment will be described with reference to Fig. 17. In the eleventh embodiment, the fixed electrode 3, the movable electrode 5, and an arc shield 6 around the electrodes 3 and 5 are disposed in an arc-extinguishing chamber formed of the ceramic insulating tubes 7a and 7b, the fixed end plate 9, the movable end plate 10, and the bellows 2, and the gas valve 28, which is disposed in the arc-extinguishing chamber and in which an SF6 gas is encapsulated, the bushing conductors 12A and 12B, and the earth terminal 53, are embedded in the molded solid insulator 21 made, for example, of an epoxy resin, to form a unit. The unit is then sandwiched by a mechanism case 13a, which accommodates an insulating operation rod 20a and a lever 31 a, and a mechanism case 13b, which accommodates a movable electrode 5b and a lever 31 b, with sealing members, such as O-rings, interposed between the unit and the mechanism cases, and the mechanism cases are fastened to opposite sides of the unit with bolts to form an earthing load break switch.

In the present embodiment, the gas valve 28 and the earthing switch can be individually opened and closed. Further, since the unit surrounded by the molded solid insulator 21 can be fastened to the mechanism cases 13a and 13b with bolts, the assembly operation is readily performed.

### Twelfth embodiment

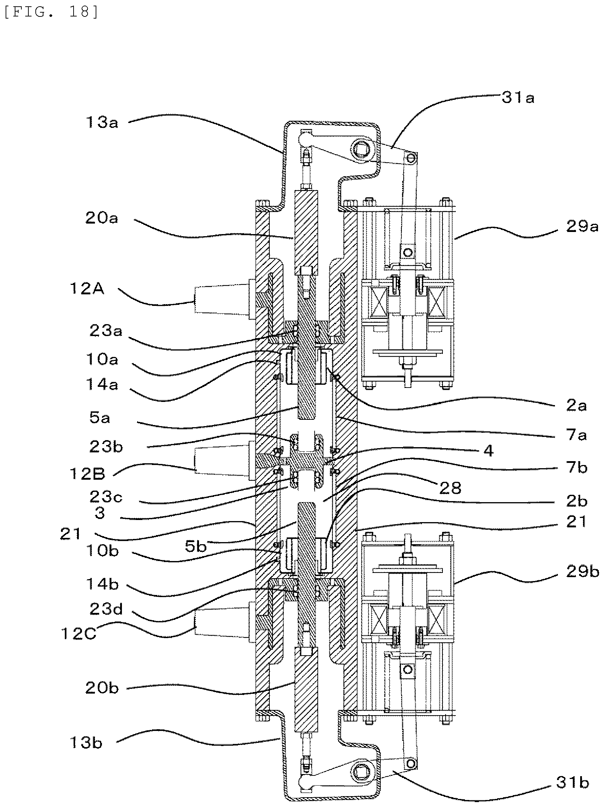

A twelfth embodiment will be described with reference to Fig. 18. In the twelfth embodiment, the fixed electrode 3 including spring contacts 23b and 23c and movable electrodes 5a and 5b are disposed in an arc-extinguishing chamber formed of the ceramic insulating tubes 7a and 7b, the intermediate electrode 4, movable end plates 10a and 10b, and bellows 2a and 2b, and the gas valve 28, which is disposed in the arc-extinguishing chamber, into which an SF6 gas is introduced through the ports 14a and 14b, and in which the SF6 gas is encapsulated, and the bushing conductors 12A, 12B, and 12C are embedded in the molded solid insulator 21 made, for example, of an epoxy resin, to form a unit. The unit is then sandwiched by the mechanism case 13a, which accommodates the insulating operation rod 20a and the lever 31a, and the mechanism case 13b, which accommodates an insulating operation rod 20b and the lever 31 b, with sealing members, such as O-rings, interposed between the unit and the mechanism cases, and the mechanism cases are fastened to opposite sides of the unit with bolts to form an earthing load break switch. Two-position electromagnetic actuators 29a and 29b control the positions of the movable electrodes 5a and 5b via the insulating operation rods 20a and 20b.

In the present embodiment, a double break load break switch can be partially assembled. Further, the bushing conductor 12B can be individually electrically conductive to and disconnected from the bushing conductor 12A and the bushing conductor 12C to achieve a switch for multi-circuit changeover that changes the connection destination to a power supply circuit or a load circuit.

### Thirteenth embodiment

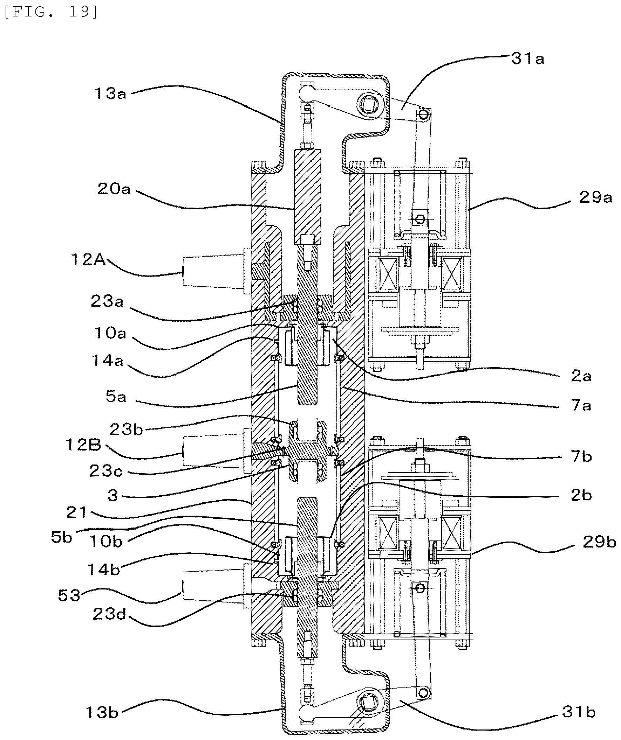

A thirteenth embodiment will be described with reference to Fig. 19. In the thirteenth embodiment, the bushing conductor 12C in the twelfth embodiment is used as the earth terminal 53 for omission of the insulating operation rod 20b.

In the present embodiment, a double break load break switch can be partially assembled, as in the twelfth embodiment. Further, omission of the insulating operation rod 20b achieves cost reduction.

### Fourteenth embodiment

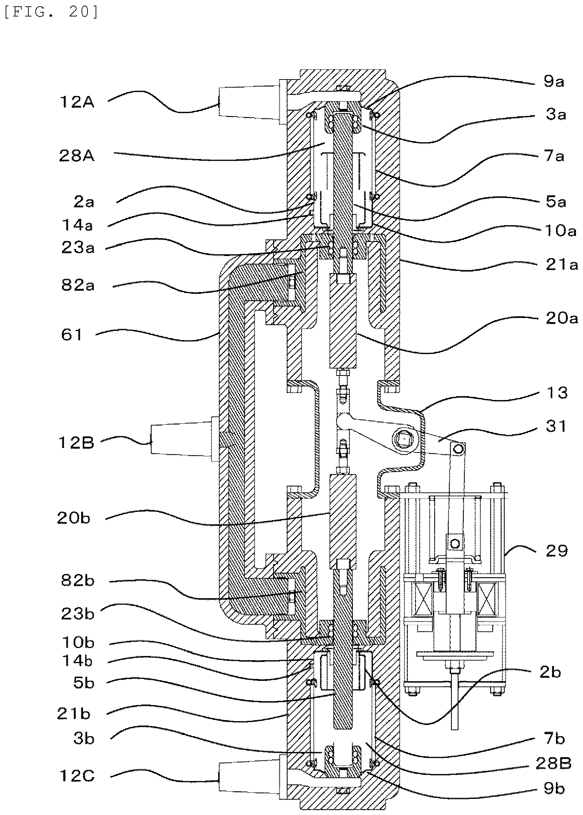

A fourteenth embodiment will be described with reference to Fig. 20. In the fourteenth embodiment, a fixed electrode 3a and the movable electrode 5a are disposed in an arc-extinguishing chamber formed of the ceramic insulating tube 7a, the movable end plate 10a, a fixed end plate 9a, and the bellows 2a, and a first gas valve 28A, which is disposed in the arc-extinguishing chamber and in which an SF6 gas is encapsulated, the bushing conductor 12A, and a movable-side conductor 82a are embedded in a molded solid insulator 21 a made, for example, of an epoxy resin, to form a first unit. A fixed electrode 3b and the movable electrode 5b are disposed in an arc-extinguishing chamber formed of the ceramic insulating tube 7b, the movable end plate 10b, a fixed end plate 9b, and the bellows 2b, and a second gas valve 28B which is disposed in the arc-extinguishing chamber and in which an SF6 gas is encapsulated, the bushing conductor 12C, and a movable-side conductor 82b are embedded in a molded solid insulator 21 b made, for example, of an epoxy resin, to form a second unit. The first and second units are mechanically connected to each other via the mechanism case 13, which accommodates the insulating operation rods 20a and 20b and the lever 31 with seal members, such as O rings, interposed between the units and the mechanism case 13, and the movable conductors 82a and 82b are electrically connected to each other via the solid insulating bus 61 to form a circuit changeover switch. Further, the two-position electromagnetic actuator 29 and the lever 31 are provided.

In the present embodiment, since the two-position electromagnetic actuator 29 can exclusively set the gas valves 28A and 28B to be conductive and interruptive, a reliable switch for circuit selection can be achieved.

### Fifteenth embodiment

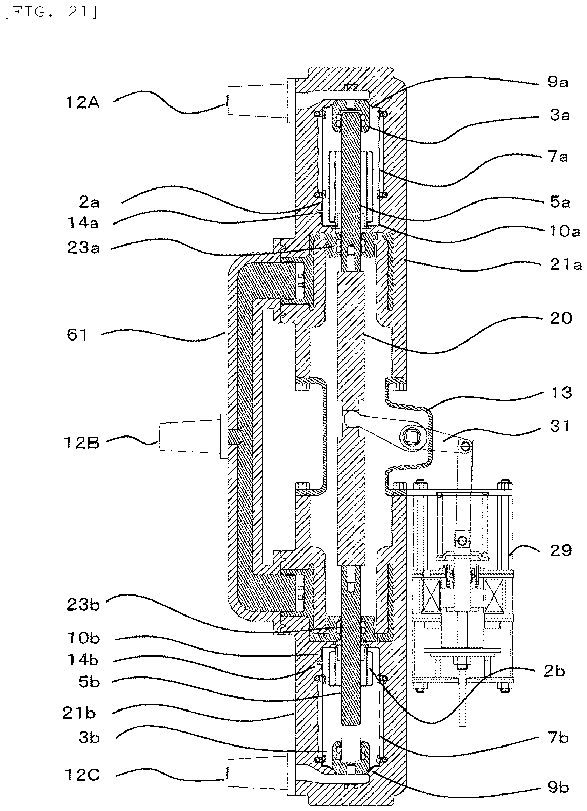

A fifteenth embodiment will be described with reference to Fig. 21. In the fifteenth embodiment, the insulating operation rods 20a and 20b in the fourteenth embodiment are integrated with each other.

In the present embodiment, integrating the insulating operation rods into one allows reduction in the number of adjustment locations, reduction in the number of assembly steps, and cost reduction resulting from the reduction in the number of parts.

### Sixteenth embodiment

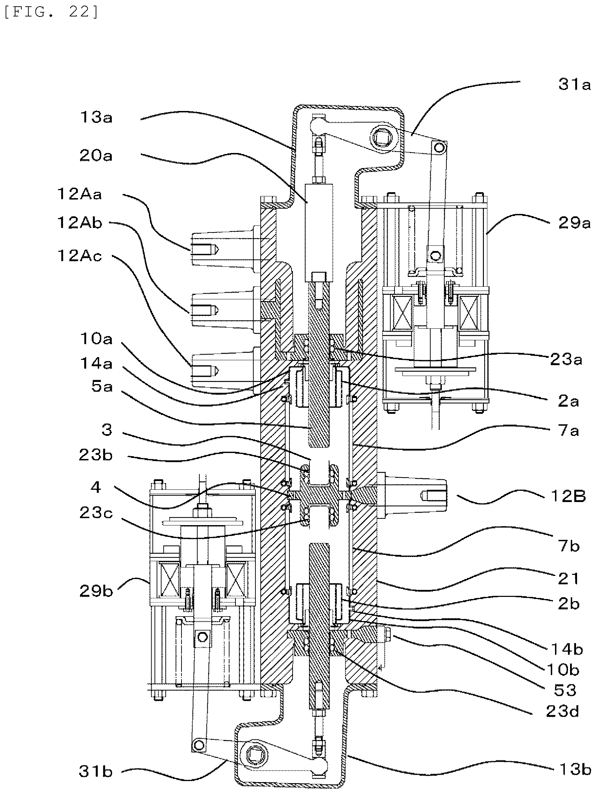

A sixteenth embodiment will be described with reference to Fig. 22. In the sixteenth embodiment, the mechanism case 13b, the lever 31 b, the two-position electromagnetic actuator 29b, the bushing conductor 12B, and the earth terminal 53 in the thirteenth embodiment are so arranged as to be flipped in the rightward/leftward direction in Fig. 22, and the bushing conductor 12A is formed of three bushing conductors 12 that are separately disposed in three position in the longitudinal direction in Fig. 22.

In the present embodiment, a load is connected to the bushing conductor 12B, and a three-phase AC power bus is connected to the bushing conductors 12Aa, 12Ab, and 12Ac for improvement in on-site installation workability.

### Seventeenth embodiment

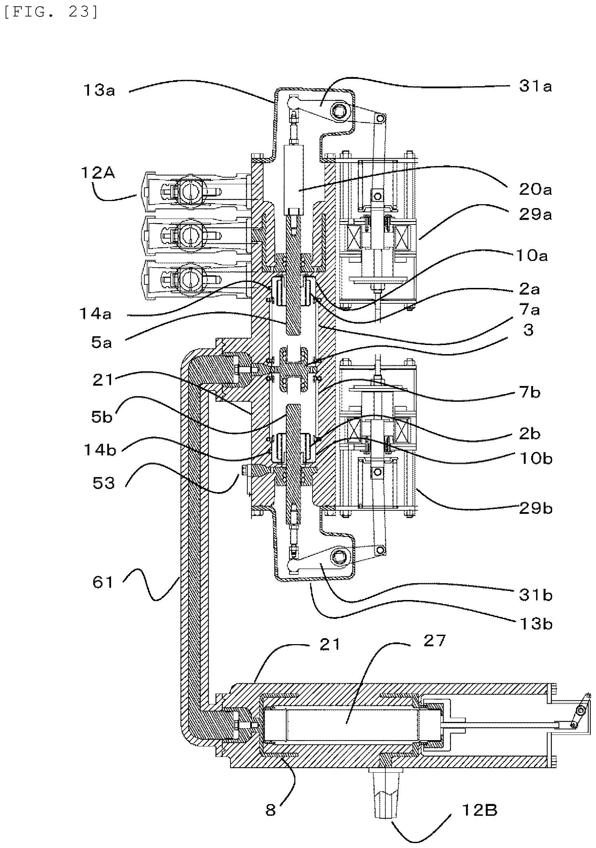

A seventeenth embodiment will be described with reference to Fig. 23. In the seventeenth embodiment, the bushing conductor 12B in the thirteenth embodiment is changed to a solid insulating bus connecting electrode, and the solid insulating bus connecting electrode is connected to the gas encapsulating fuse in the sixth embodiment via the solid insulating bus 61.

In the present embodiment, the same function as that provided in the ninth embodiment shown in Fig. 15 can be achieved by using the two two-position electromagnetic actuators 29a and 29b.

### Eighteenth embodiment

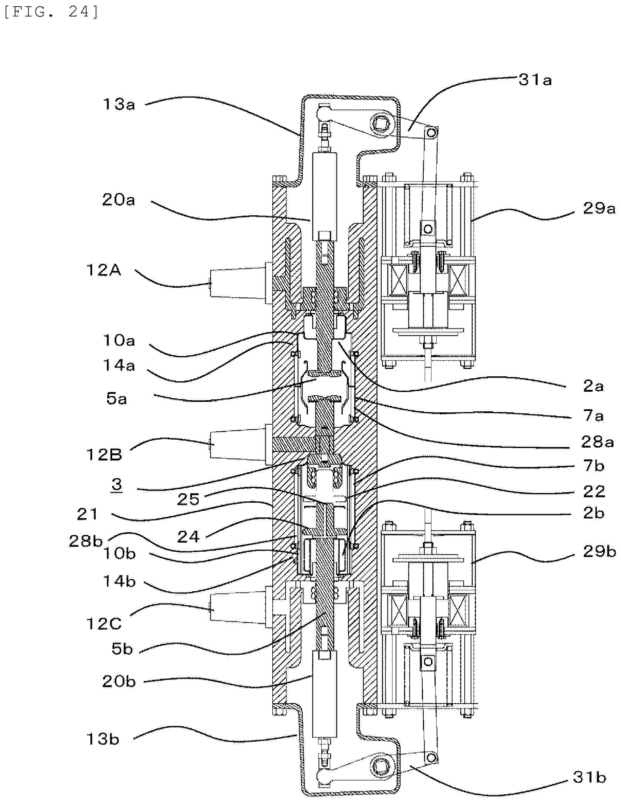

An eighteenth embodiment will be described with reference to Fig. 24. In the eighteenth embodiment, the double break gas valve in the twelfth embodiment is replaced with two single break gas valves 28a and 28b.

In the present embodiment, since the structure of each of the gas valves can be simplified, partial assembly workability is improved.

### Nineteenth embodiment

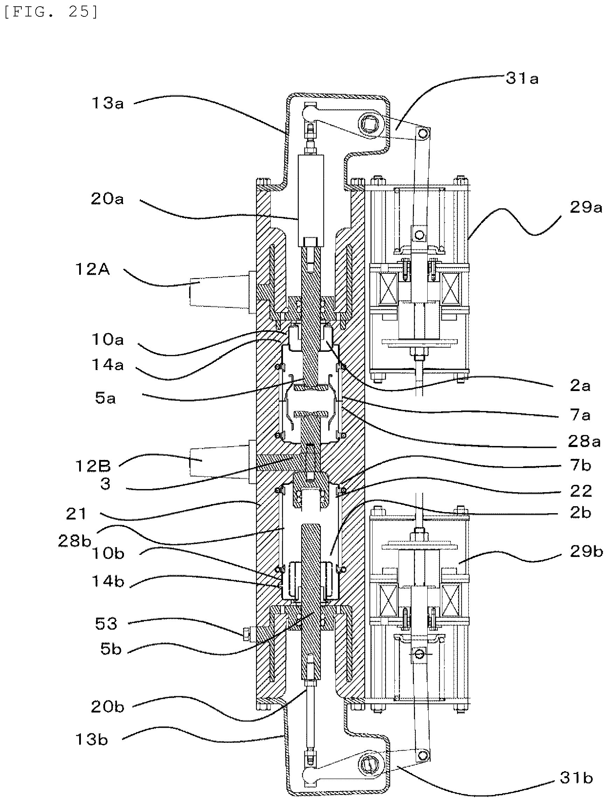

A nineteenth embodiment will be described with reference to Fig. 25. In the nineteenth embodiment, one of the gas valves or the gas valve 28b in the eighteenth embodiment is replaced with a gas disconnector.

In the present embodiment, since the structure of each of the gas valves can be simplified, as in the eighteenth embodiment, partial assembly workability is improved, and the replacement of the gas valve 28b with a gas disconnector achieves cost reduction.

### Twentieth embodiment

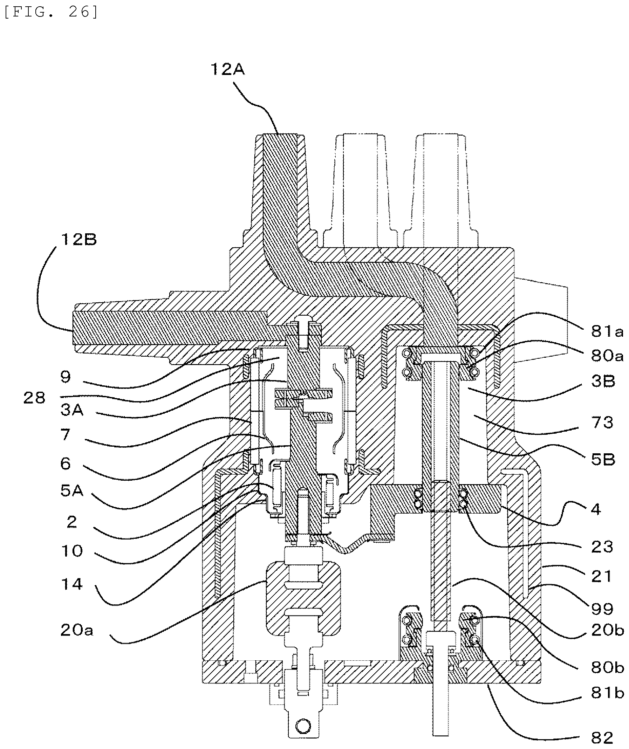

A twentieth embodiment will be described with reference to Fig. 26. In the twentieth embodiment, a fixed electrode 3A and a movable electrode 5A are disposed in an arc-extinguishing chamber formed of the ceramic insulating tube 7, the movable end plate 10, the fixed end plate 9, and the bellows 2, and a gas valve which is disposed in the arc-extinguishing chamber and in which an SF6 gas is encapsulated, the bushing conductors 12A and 12B, and an embedded shield 99 are embedded in the molded solid insulator 21 made, for example, of an epoxy resin, to form a unit. The unit accommodates the insulating operation rods 20a and 20b, a movable electrode 5B, and the intermediate electrode 4, a lid 82 is attached to the unit to form a sealed space, and dry air or an SF6 gas is encapsulated in the sealed space. The embedded shield 99 is caused to overhang downward in Fig. 26 beyond the intermediate electrode 4 and the movable electrode 5A so that an equipotential plane is drawn downward in Fig. 26 to relax the electric field on the surfaces of the intermediate electrode 4 and the movable electrode 5A for improvement in the withstand voltage performance.

In the present embodiment, the arrangement in which the gas valve 28 and the earthing disconnector 73 are disposed side by side allows size reduction.

### Twenty-first embodiment

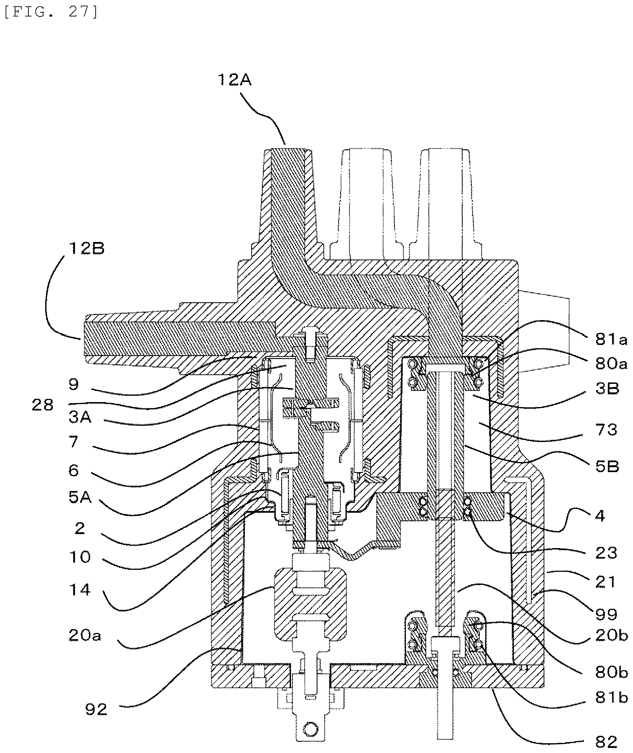

A twenty-first embodiment will be described with reference to Fig. 27. In the twenty-first embodiment, a coating 92 is provided on the inner surfaces of the solid insulator 21 and the lid 82 in the configuration of the twentieth embodiment. As the material of the coating 92, a water-repellent material, such as a fluorocarbon resin coating, is selected.

In the present embodiment, since moisture occluded in the solid insulator 21 is unlikely to be discharged into the gas space due to the coating, the insulation reliability can be improved.

### Twenty-second embodiment

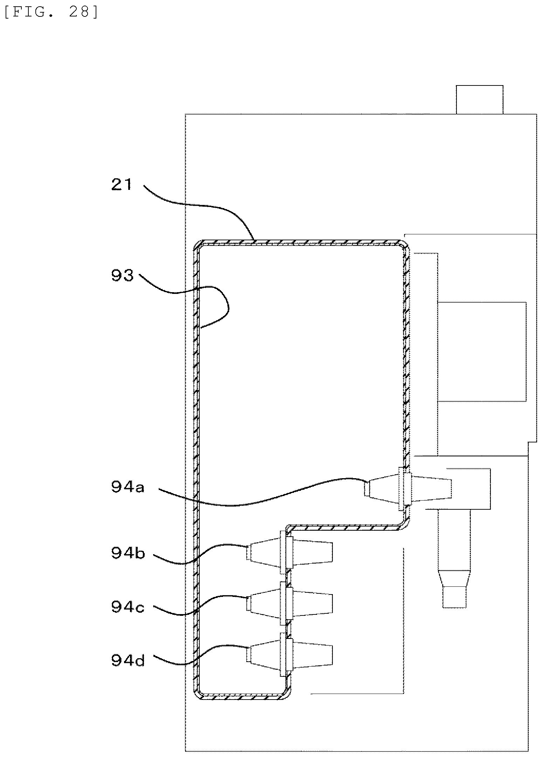

A twenty-second embodiment will be described with reference to Fig. 28. The twenty-second embodiment corresponds to a gas container for a switchgear in which epoxy bushings 94a, 94b, 94c, and 94d are attached to a metal-welded chamber 93 with airtightness between the chamber and the bushings maintained by using O rings that are not shown, and the solid insulator 21 is so molded as to enclose the portions where the epoxy bushings 94a, 94b, 94c, and 94d are joined with the metal-welded chamber 93.

In the present embodiment, in which the portions where the epoxy bushings 94a, 94b, 94c, and 94d are joined with the meal-welded chamber 93, which is prone to leakage, is covered with the solid insulator, even if the gas leaks through the portions where the epoxy bushings 94a, 94b, 94c, and 94d are joined with the meal-welded chamber 93, the gas can be blocked by the solid insulator 21. The airtightness reliability can therefore be improved as compared with a gas container for a switchgear so configured that the epoxy bushings 94a, 94b, 94c, and 94d are attached to the metal-welded chamber 93 with the airtightness maintained by using O rings that are not shown.

### Twenty-third embodiment

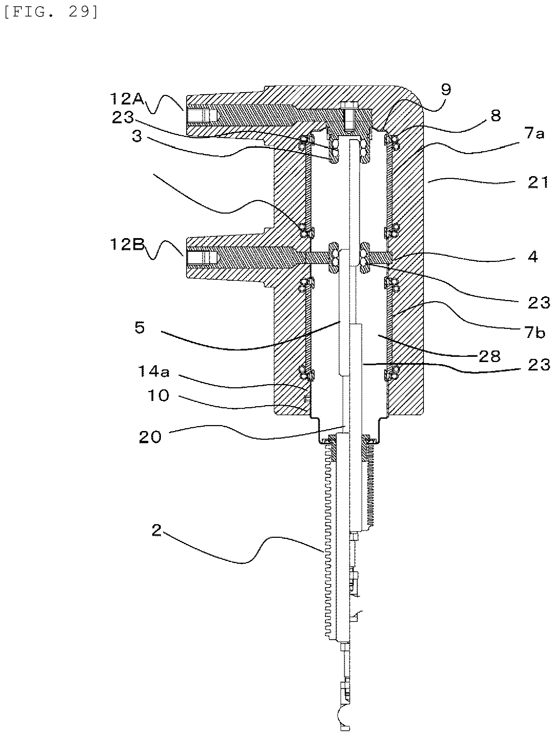

A twenty-third embodiment will be described with reference to Fig. 29. In the twenty-third embodiment, the electric field relaxation shield 8 is so arranged as to be layered on another electric field relaxation shield 8. Further, the bellows 2 is so disposed as to protrude outward from the gas valve 28.

In the present embodiment, in which the electric field relaxation shields 8 are so arranged as to be layered on each other, an electric field relaxation effect higher than that in the seventh embodiment is provided. Further, since the axial length between the movable end plate 10 and the insulating operation rod 20 located in the gas can be shortened as compared with the seventh embodiment, cost reduction can be achieved.

### Twenty-fourth embodiment

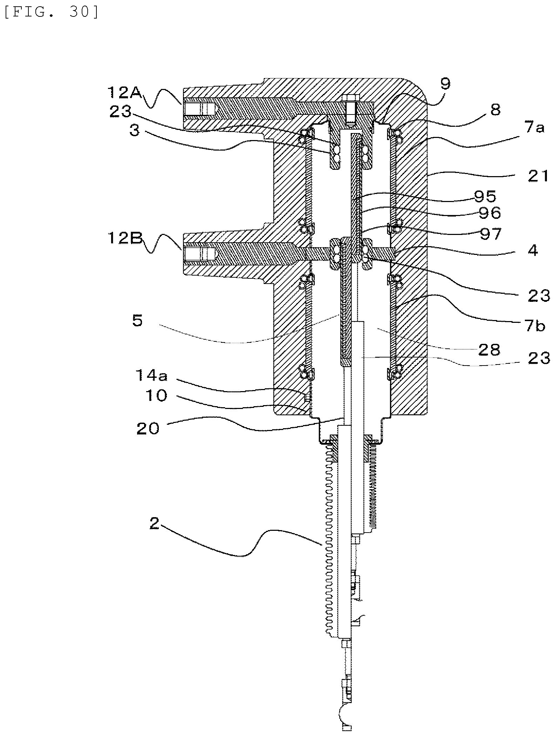

A twenty-fourth embodiment will be described with reference to Fig. 30. In the twenty-fourth embodiment, the movable electrode 5 in the twenty-third embodiment is formed of a combination of a tubular resistor 95, insulator 96, and conductor 97, which are coaxial to one another and inscribe or circumscribe each other.

In the present embodiment, the resistor 95 first comes into contact with the fixed electrode 3 in the current conducting action, the insulator 95 then comes into contact with the fixed electrode 3, and the conductor 97 finally comes into contact with the fixed electrode 3. The action described above can prevent excitation inrush current when a transformer load is connected.

### Twenty-fifth embodiment

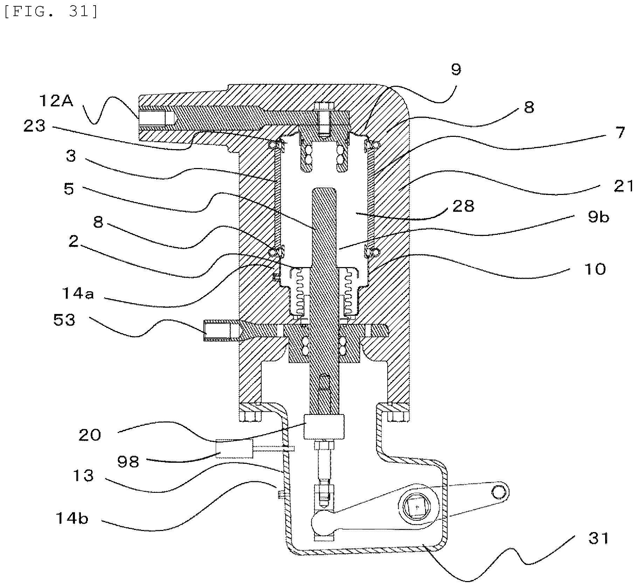

A twenty-fifth embodiment will be described with reference to Fig. 31. The twenty-fifth embodiment is a variation of the fourth embodiment, and the mechanism case 13 is provided with an SF6 gas leakage sensor 98.

In the present embodiment, in a case where the bellows 2 in the gas valve 28 is damaged and the SF6 gas encapsulated in the gas valve 28 leaks into the mechanism case 13, the SF6 gas leakage sensor 98 can detect the leakage with precision, whereby the reliability can be improved.

### Twenty-sixth embodiment

A twenty-sixth embodiment will be described with reference to Figs. 1, 5, 6, 17, 26, and 27. In the twenty-sixth embodiment, the gas valve 28 is not filled with an SF6 gas, but the interior of the gas valve 28 is exhausted to a high vacuum state.

In the present embodiment, the combination of the gas valve 28 the interior of which is exhausted to a high vacuum state and the SF6 gas insulating operation rod in Figs. 1, 5, and 6 or the combination of the gas valve 28 the interior of which is exhausted to a high vacuum state, the SF6 gas insulating operation rod, and the gas insulating earthing switch or the earthing disconnector in Figs. 17, 26, and 27 allows high current interruption performance and a compact entire configuration to be achieved.

### Twenty-seventh embodiment

Atwenty-seventh embodiment will be described with reference to Figs. 13, 20, 21, 24, and 25. In the twenty-seventh embodiment, one of the plurality of gas valves is not filled with an SF6 gas, but the interior of the gas valve is exhausted to a high vacuum state.

In the present embodiment, combining the high current interruption performance of the gas valve which is shown in the lower portion of Fig. 13 and the interior of which is exhausted to a high vacuum state with the gas insulating earthing disconnector shown in the upper portion of Fig. 13 allows both high current interruption performance and excellent insulation performance. In Figs. 20, 21, 24, and 25, use of either the gas valve the interior of which is exhausted to a high vacuum state or the gas valve filled with the SF6 gas on a circuit basis allows an apparatus connected to the circuits to be provided with an optimum switching section.

### [Reference Signs List]

- 1: Vacuum interrupter
- 2: Bellows
- 3: Fixed electrode
- 4: Intermediate electrode
- 5: Movable electrode
- 6: Arc shield
- 7: Ceramic insulating tube
- 8: Electric field relaxation shield
- 9, 9a, 9b: Fixed end plate
- 10, 10a, 10b: Movable end plate
- 12A, 12B: Bushing conductor
- 13: Mechanism case
- 14a, 14b: Port
- 20: In-gas insulating operation rod
- 21: Solid insulator
- 22: Solid insulating tube
- 23: Spring contact
- 24: Piston
- 25: Orifice
- 26: Arc-resistant metal
- 27: Fuse
- 28: Gas valve
- 29: Two-position electromagnetic actuator
- 30: Three-position electromagnetic actuator
- 31: Lever
- 40: Cable head
- 41: Insulating plug
- 42: Cable
- 53: Earth circuit
- 60: Inter-circuit linkage bus
- 61: Solid insulating bus
- 70: Power supply circuit
- 71: Earth circuit
- 72: Load circuit
- 73: Earthing disconnector
- 74: Interruption section
- 80a, 80b: Contact
- 81a, 81b: Spring
- 82: Lid
- 90: Shaft
- 91a, 91b: Link
- 92: Coating
- 93 Metal-welded chamber94a, 94b, 94c, 94d: Epoxy bushing
- 95: Coaxial tubular resistor
- 96: Insulator
- 97: Conductor
- 98: SF6 gas leakage sensor
- 99: Embedded shield

## Claims

1. A switchgear comprising:
an arc-extinguishing chamber including an insulating tube, a fixed end plate provided at one end of the insulating tube, a movable end plate provided at another end of the insulating tube, a fixed electrode provided on the fixed end plate, a movable electrode that is allowed to move and so provided as to pass through the movable end plate, a bellows attached to the movable end plate and the movable electrode, and a supply/discharge port for supplying and discharging a gas;
a first bushing conductor electrically connected to the fixed electrode; and
a second bushing conductor electrically connected to the movable electrode,
wherein the arc-extinguishing chamber, the first bushing conductor, and the second bushing conductor are embedded in a molded solid insulator to form a switching section.

2. The switchgear according to claim 1,
wherein a piston that moves integrally with the movable electrode while roughly sliding along the insulating tube is provided in the arc-extinguishing chamber, and
the movable electrode includes an orifice that communicates with a space on one side of the piston or a side opposite the fixed electrode.

3. The switchgear according to claim 1,
wherein each of the movable electrode and the fixed electrode has a spiral shape that allows magnetic drive force to act on an arc ignited between the electrodes.

4. The switchgear according to any of claims 1 to 3,
wherein an electric field relaxation shield is so provided as to be in contact with an outer circumference of the insulating tube and embedded in the solid insulator.

5. The switchgear according to any of claims 1 to 4,
wherein the second bushing conductor is a terminal for an earth circuit, and only an electrode portion of the terminal protrudes through a surface of the molded solid insulator.

6. A switchgear comprising:
an arc-extinguishing chamber including an insulating tube, a fixed end plate provided at one end of the insulating tube, a movable end plate provided at another end of the insulating tube, a fixed electrode provided on the fixed end plate, a movable electrode that is allowed to move and so provided as to pass through the movable end plate, a bellows attached to the movable end plate and the movable electrode, a supply/discharge port for supplying and discharging a gas, and an intermediate electrode provided between the fixed electrode and the movable electrode;
a first bushing conductor electrically connected to the fixed electrode;
a second bushing conductor electrically connected to a second fixed electrode provided on a side facing the movable end plate; and
a third bushing conductor electrically connected to the intermediate electrode,
wherein the arc-extinguishing chamber, the first bushing conductor, the second bushing conductor, and the third bushing conductor are embedded in a molded solid insulator to form an earthing switch section, and
the earthing switching section takes a first state in which the fixed electrode is electrically connected to the intermediate electrode, a second state in which the fixed electrode is isolated from the intermediate electrode and the intermediate electrode is isolated from the second fixed electrode, and a third state in which the intermediate electrode is electrically connected to the second fixed electrode.

7. A fuse unit **characterized in that** the fuse unit comprises:
an arc-extinguishing chamber including an insulating tube, a fixed end plate provided at one end of the insulating tube, and a movable end plate provided at another end of the insulating tube;
a first bushing conductor electrically connected to the fixed end plate;
a second bushing conductor electrically connected to the movable end plate; and
an electric field relaxation shield provided around an end of the arc-extinguishing chamber, and
an airtight space formed by embedding the arc-extinguishing chamber, the first bushing conductor, the second bushing conductor, and the electric field relaxation shield in a molded solid insulator to form a unit, then inserting a fuse into the unit so that the fuse is attached to the unit, and putting a cap for maintaining airtightness around the fuse onto the unit is filled with an SF6 gas.

8. A fuse unit **characterized in that** the fuse unit comprises:
an arc-extinguishing chamber including an insulating tube, a fixed end plate provided at one end of the insulating tube, and a movable end plate provided at another end of the insulating tube;
a first bushing conductor electrically connected to the fixed end plate;
a second bushing conductor electrically connected to the movable end plate; and
an electric field relaxation shield provided around an end of the arc-extinguishing chamber, and
a solid insulator is so molded as to enclose the arc-extinguishing chamber, the first bushing conductor, the second bushing conductor, the electric field relaxation shield, and the fuse.

9. A switchgear that electrically connects in series the first bushing conductor according to any of claims 1 to 4 and 7 to 8 to the third bushing conductor of the earthing switch section according to claim 6 to connect a load circuit connected to the second bushing conductor of the switching section to a power supply circuit connected to the first bushing conductor of the earthing switch section or an earth circuit connected to the second bushing conductor.

10. A switchgear comprising:
an arc-extinguishing chamber including an insulating tube, a fixed-side electrode provided at a side facing one end of the insulating tube, a movable-side electrode provided at a side facing another end of the insulating tube, an intermediate electrode provided between the fixed-side electrode and the movable-side electrode, a first terminal electrically connected to the fixed-side electrode, a second terminal electrically connected to the movable electrode, and a third terminal electrically connected to the intermediate electrode;
a mechanism case having a supply/discharge port for supplying and discharging a gas and fastened to the arc-extinguishing chamber with a bolt with airtightness between the mechanism case and the arc-extinguishing chamber maintained by using a seal member;
a first bushing conductor electrically connected to the fixed-side electrode;
a second bushing conductor electrically connected to the movable-side electrode; and
a third bushing conductor electrically connected to the intermediate electrode,
wherein the arc-extinguishing chamber, the mechanism case, the bolt-fastening section, the first bushing conductor, the second bushing conductor, and the third bushing conductor are embedded in a molded solid insulator.

11. The switchgear according to any of claims 1 to 4, further comprising:
a first terminal electrically connected to the fixed electrode;
a first mechanism case that is located on a side facing the fixed electrode, includes a second movable electrode and a first lever for operating the second movable electrode, and is fastened to the switching section with a bolt via a first seal member; and
a second mechanism case that is located on a side facing the movable electrode, includes a second lever connected to the movable electrode via an insulating operation rode, and is fastened to the switching section with a bolt via a second seal member.

12. The switchgear according to any of claims 1 to 4, further comprising:
a second switching section including
a second arc-extinguishing chamber including a second insulating tube, a second fixed end plate provided at one end of the second insulating tube, a second movable end plate provided at another end of the second insulating tube, a second fixed electrode provided on the second fixed end plate, a second movable electrode that is allowed to move and so provided as to pass through the second movable end plate, a second bellows attached to the second movable end plate and the second movable electrode, and a second supply/discharge port for supplying and discharging a gas,
a third bushing conductor electrically connected to the second fixed electrode, and
a fourth bushing conductor electrically connected to the second movable electrode,
the second arc-extinguishing chamber, the third bushing conductor, and the fourth bushing conductor embedded in a molded solid insulator;
a solid insulating bus that electrically connects the second bushing conductor to the fourth bushing conductor;
a mechanism case that accommodates an insulating operation rod and a lever that connect the movable electrode to the second movable electrode and transmit operation force to the movable electrodes; and
seal members provided between the switching section and the mechanism case and between the second switching section and the mechanism case.

13. A switchgear comprising:
a unit that encloses the switching section according to any of claims 1 to 4 embedded in a molded solid insulator; and
an intermediate electrode, a fixed-side terminal, a movable-side terminal, a second movable electrode that electrically connects the intermediate electrode to the fixed-side terminal or the fixed-side terminal to the movable-side terminal, and a first insulating operation rod and a second insulating operation rod that transmit operation force to the movable electrode and the second movable electrode and are so arranged that axes of the rods are roughly parallel to each other, which are disposed in the unit, and a lid formed of a solid insulator and provided at an opening of the unit,
wherein dry air or an SF6 gas is encapsulated in a sealed space formed by the unit and the lid.

14. The switchgear according to claim 13,
wherein a water-repellent film is coated on an inner surface of the sealed space formed by attaching the lid made of a solid insulator to the unit formed by molding a solid insulator.

15. The switchgear according to any of claims 1 to 14,
wherein a plurality of spring-shaped electric field relaxation shields are so disposed as to be in intimate contact with each other.

16. The switchgear according to any of claims 1 to 5,
**characterized in that** the bellows is disposed in a position outside a sealed space.

17. The switchgear according to any of claims 1 to 2 and 4 to 16,
**characterized in that** the movable electrode is formed of a combination of a tubular resistor, insulator, and conductor that are coaxial to one another and inscribe or circumscribe each other, the resistor first comes into contact with the fixed electrode in a current conduction action, the insulator then comes into contact with the fixed electrode, and the conductor finally comes into contact with the fixed electrode.

18. The switchgear according to any of claims 1 to 5,
wherein in a configuration in which the arc-extinguishing chamber where the movable electrode comes into contact with the fixed electrode and separates away therefrom is filled with an SF6 gas and the mechanism case is filled with dry air, an SF6 gas leakage sensor is provided in the mechanism case.

19. The switchgear according to any of claims 1 to 6 and 9 to 18,
wherein a gas is provided in the arc-extinguishing chamber where the movable electrode comes into contact with the fixed electrode and separates away therefrom, and gas pressure in the arc-extinguishing chamber > gas pressure in the mechanism case > atmospheric pressure is satisfied.

20. The switchgear according to any of claims 1 to 19,
wherein an end of an electric field relaxation shield embedded in the molded solid insulator extends in an axial direction beyond a side end portion of the movable electrode or a side end portion opposite an electrical contact surface thereof.

21. The switchgear according to any of claims 1 to 20,
wherein conductive paint is applied onto an outer surface of the molded solid insulator to allow the outer surface to have earth potential.

22. The switchgear according to any of claims 1 to 6 and 9 to 12,
wherein an interior of the arc-extinguishing chamber is exhausted to a high vacuum state.

23. A switchgear in which two arc-extinguishing chambers each including an intermediate electrode, insulating tubes provided at opposite ends of the intermediate electrode, movable end plates provided at ends of the insulating tubes, movable electrodes that are allowed to move and so provided as to pass through the movable end plates, bellows each attached to corresponding one of the movable end plates and the movable electrodes, and supply/discharge ports for supplying and discharging a gas are so disposed as to face each other, bushing conductors are connected to sides of the arc-extinguishing chambers or sides opposite the intermediate electrode, each of the arc-extinguishing chambers and the bushing conductors are embedded in a molded solid insulator to form a unit, and two sets of mechanism cases each accommodating an insulating operation rod and a lever are fastened to opposite sides of the units with bolts with seal members interposed between the units and the mechanism cases.

24. The switchgear according to claim 23,
wherein the movable electrode combined with one of the bushing conductors is directly connected to the operation lever.

25. The switchgear according to claim 23,
wherein one of the mechanism cases, one of the levers, a two-position electromagnetic actuator, and one of the bushing conductors and the other mechanism case, the other lever, another two-position electromagnetic actuator, and the other bushing conductor are disposed in an axial symmetric manner, and one of the bushing conductors is formed of three bushing conductors and disposed in three axially separate positions.

26. The switchgear according to claim 23,
wherein the intermediate bushing conductor is connected to a solid insulating bus connection electrode, the bushing conductor at one end is used as an earth terminal, and the solid insulating bus connection electrode is connected to the gas insulating fuse according to claim 7 via a solid insulating bus.

27. The switchgear according to claim 23,
wherein the arc-extinguishing chamber is formed of two single break gas valves.

28. The switchgear according to claim 23,
wherein one of the arc-extinguishing chambers is a gas disconnector.

29. A switchgear **characterized in that** in a gas container formed by attaching a bushing made of a solid insulator to a metal-welded chamber with airtightness therebetween maintained by using a seal member, another solid insulator is so molded as to enclose a portion where the solid insulator bushing is joined with the metal-welded chamber.
